# EUROPÄISCHE PATENTSCHRIFT

(11) **EP 1 510 383 B1**
(45) Veröffentlichungstag und Bekanntmachung des Hinweises auf die Patenterteilung: **30.11.2011**
(21) Anmeldenummer: 04018091.1
(22) Anmeldetag: 30.07.2004
(51) Int. Cl.: B60J 1/20

(54) **Aus Kunststoff gespritzte Führungsschiene**
Moulded plastic guide rail
Glissière en matière plastique moulée

(30) Priorität: 28.08.2003 DE 10339583
(43) Veröffentlichungstag der Anmeldung: 02.03.2005
(60) Teilanmeldung: 11159045.1
(73) Patentinhaber: BOS GmbH & Co. KG, 73760 Ostfildern (DE)
(72) Erfinder: Hansen, Melf, 75053 Gondelsheim (DE); Walter, Herbert, 73061 Ebersbach (DE); Maier, Matthias, 73733 Esslingen (DE); Weinbrenner, Harry, 73760 Ostfildern (DE); Bühl, Olaf, 73095 Albershausen (DE)
(74) Vertreter: Rüger, Barthelt & Abel Patentanwälte

(56) Entgegenhaltungen:
- EP-A- 1 215 063
- CH-A- 455 231
- DE-U1- 9 010 440

## Beschreibung

Die DE 100 57 759 A1 zeigt ein Heckscheibenrollo für Kraftfahrzeuge. Zu dem Heckscheibenrollo gehört eine unterhalb der Hutablage drehbar gelagerte Wickelwelle, an der mit einer Kante die Rollobahn befestigt ist. Die Rollobahn ist etwa trapezförmig zugeschnitten und mit ihrer anderen, von der Wickelwelle abliegenden Kante an einem Zugstab befestigt. Der Zugstab wird seitlich in zwei Führungsschienen geführt, die an der Innenseite der Heckscheibe aufgeklebt bzw. hinter der C-Säulenverkleidung in der Karosserie verborgen sind. In den Führungsschienen laufen biegeelastische Schubglieder, die ausknicksicher in den Führungsschienen geführt sind.

Die Führungsschienen bestehen aus einem Aluminiumstrangpressprofil, das eine durchgehende hinterschnittene Nut enthält. Die Nut setzt sich zusammen aus einem kreisförmigen Querschnittsabschnitt und einem rechteckförmigen, wobei der rechteckförmige schmäler ist als es dem Duchmesser des Kreises entspricht. Der rechteckförmige Abschnitt bildet den Schlitz, über den die Führungsnut nach außen hin offen ist.

In den Führungsschienen laufen Gleit- oder Führungskörper, die einen Kopf aufweisen, der im Querschnitt an den kreisförmigen Abschnitt des Führungsschienenprofils angepasst ist. Dieser Kopf hat entweder die Gestalt einer Kugel oder eines kurzen zylindrischen Stückes, das so bemessen ist, dass es in den gekrümmten Abschnitten der Führungsschienen nicht klemmt. Der Durchmesser des Halses ist so bemessen, dass er klemmfrei durch den Schlitz der Führungsnut passt.

Der Kopf des Führungsteils des Auszugprofils besteht üblicherweise aus einem gespritzten Kunststoff.

Es hat sich im Laufe der Zeit herausgestellt, dass die Paarung aus dem Kunststoff und der Aluminiumschiene nicht unter allen Bedingungen klapperfrei ist.

Die Reibpaarung aus den Kunststoffführungskörpern und der Aluminiumschiene ist ebenfalls nicht optimal.

Schließlich bestehen gewisse Schwierigkeiten die Führungsschiene mit der Innenverkleidung zu kombinieren.

Eine Führungsshienenanordung mit den Merkmalen des Oberbegriffs des Anspruchs 1 ist aus der EP 1 215 063 A1 bekannt.

Ausgehend hiervon ist es Aufgabe der Erfindung eine neue Führungsschienenanordnung zu schaffen, die die Nachteile nach dem Stand der Technik vermeidet.

Diese Aufgabe wird erfindungsgemäß durch die Führungsschiene mit den Merkmalen des Anspruches 1 oder 24 gelöst.

Bei der einen Lösung ist vorgesehen, die Führungsschienenanordnung aus zwei Teilen zusammen zu setzen. Der eine Teil bildet den Außenteil, der aus einem elastisch verformbaren Material hergestellt ist. Der andere Teil dient als Stützteil und besteht aus einem weniger verformbarem Material um auf alle Fälle sicher zu stellen, dass der Außenteil, der die hinterschnittene Führungsnut enthält, stabilisiert wird, damit im Laufe der Zeit sich die Schlitzweite der Führungsnut nicht verändert.

Der wesentliche Vorteil dieser Anordnung besteht unter anderem darin, dass bei einer Reihe von Gestaltungen des Außenteils zur Herstellung keine Spritzwerkzeuge mit einem ziehbaren Kern benötigt werden. Da das Material des Außenteils elastisch verformbar ist, kann das fertig gespritzte Teil von dem Kern, der die hinterschnittene Führungsnut beim Spritzen frei hält, einfach abgezogen werden. Hierdurch verbilligt sich das Herstellungsverfahren erheblich. Insbesondere ist es möglich auf diese Weise einfach das Außenteil einstückig mit einem daran angeformten Abschnitt der Innenverkleidung des Kraftfahrzeuges zu integrieren. Der Stützteil selbst besitzt keine hinterschnittenen Nuten und benötigt so auf keinen Fall irgend welche Spritzgusswerkzeuge mit beweglichen Kernen.

Der Außenteil kann eine schmale, längliche Form aufweisen, die im Wesentlichen dem Formverlauf der Führungsnut folgt.

Die Verbindungsmittel zwischen dem Stützteil und dem Außenteil können von Rastmitteln gebildet sein. Diese Rastmittel umfassen beispielsweise einen Haken, der als hintergriffige Leiste ausgeführt sein kann. Komplementäre Verbindungsmittel sind an dem Stützteil vorgesehen. Auch hierbei kann wiederum eine hinterschnittene Leiste verwendet werden. Eine hinterschnittene Leiste stellt bei dem Stützteil kein Problem dar, soweit beispielsweise als Strangpressprofil hergestellt wird, das nachträglich in die gewünschte Form gebogen wird.

Das Material des Außenteils ist vorzugsweise aus einer Gruppe von Thermoplasten ausgewählt. Hierdurch wird die gewünschte Nachgiebigkeit erzeugt, wobei die Gefahr einer eventuellen Verformung im Laufe der Zeit durch das Stützteil begegnet wird.

Der Stützteil weist hierzu einen Bereich auf, der im montierten Zustand die Führungsnut, zumindest abschnittsweise, an den Flanken seitlich stützt. Im einfachsten Falle enthält das Stützteil hierzu eine Nut, die U-förmig gestaltet ist und Parallelflanken aufweist.

Der Stützteil kann aus einem Leichtmetall hergestellt sein.

Im Übrigen sind Weiterbildungen Gegenstand von Unteransprüchen.

Nach dem Lesen der Beschreibung wird dem Fachmann klar, dass eine Reihe von Abwandlungen möglich sind.

In der Zeichnung sind Ausführungsbeispiele des Gegenstandes der Erfindung dargestellt. Es zeigen:
- Fig. 1: eine teilweise aufgebrochene Heckpartie eines Kraftfahrzeuges, in einer perspektivischen Dar- stellung mit Blick gegen die Innenseite der Heck- scheibe,
- Fig. 2: den prinzipiellen Aufbau des Heckscheibenrollos nach Fig. 1 und
- Fig. 3: eine erste Führungsschienenanordnung bestehend aus einem Stützteil und einem Außenteil, in einem Schnitt quer zur Längserstreckung der Führungs- nut.

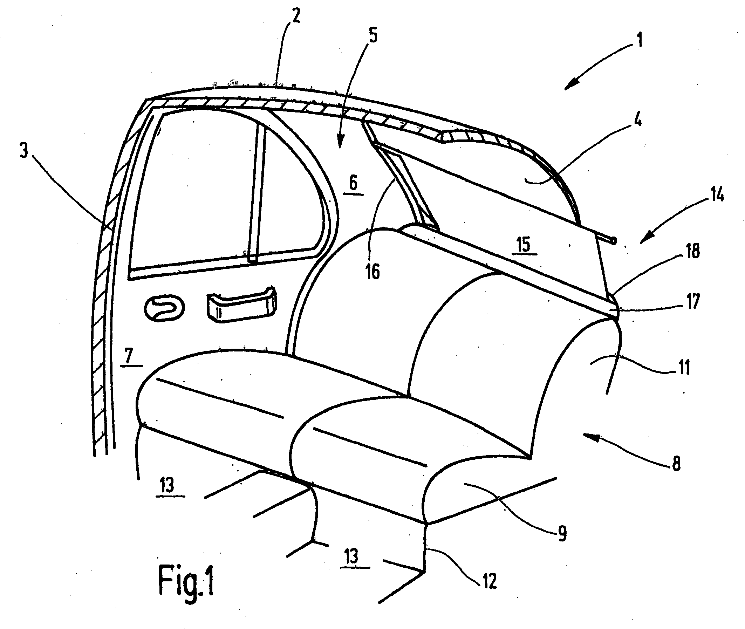

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine Innenverkleidung 6.

Zwischen der B-Säule 3 und der C-Säule 5 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogene Rollobahn sowie eine der seitlichen Führungsschienen 16 zu erkennen. Die Führungsschiene 16 beginnt an einer hinter der Rücksitzlehne 11 vorhandenen Hutablage 17 und verläuft neben der seitlichen Fensterkante. Außerdem enthält die Hutablage 17 einen durchgehendenden Auszugsschlitz 18, aus dem die Rollobahn 15 herausläuft.

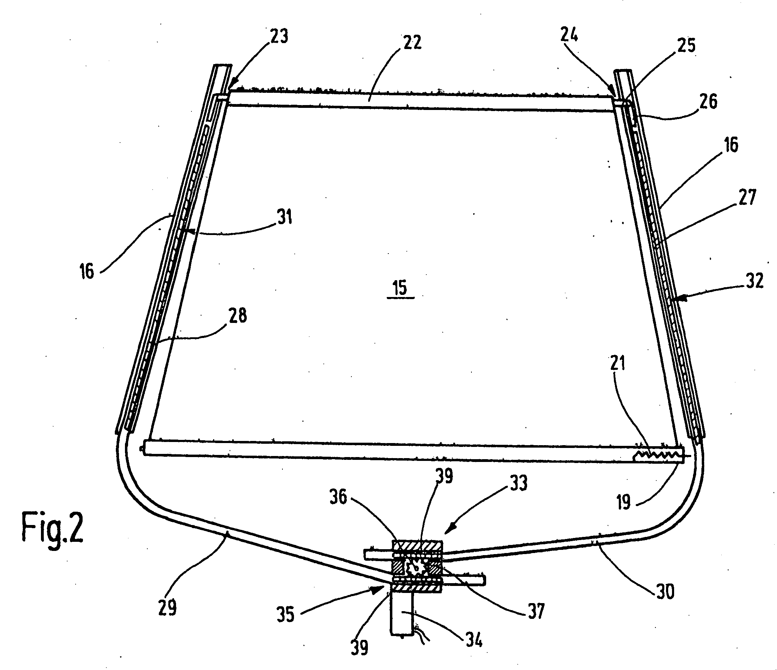

Der prinzipelle Aufbau des Heckscheibenrollos 14 ergibt sich aus Fig. 2.

Unterhalb der Hutablage 17 ist, wie sich aus Fig. 2 ergibt, eine Wickelwelle 19 drehbar gelagert, an der mit einer Kante die Rollobahn 15 befestigt ist. Die Wickelwelle 19 ist mit Hilfe eines schematisch angedeuteten Federmotors 21 im Sinne des Aufwickelns der Rollobahn 15 auf die Wickelwelle 19 vorgespannt. Hierzu ist eine Schraubenfeder vorgesehen, die einends karosseriefest verankert und andernends in der Wickelwelle 19 festgelegt ist.

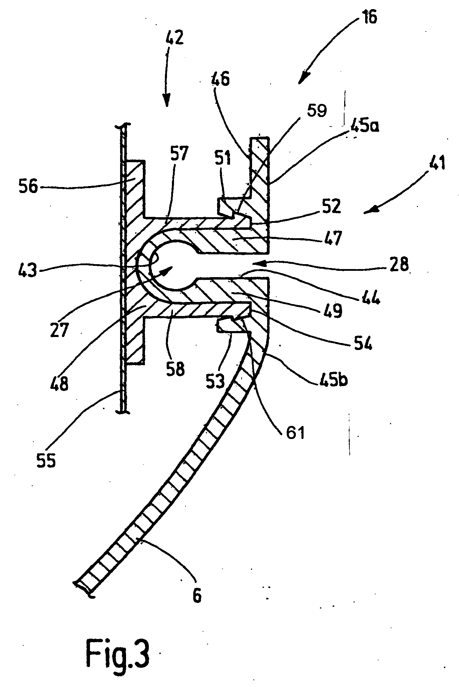

Die Rollobahn 15 weist einen etwa trapezförmigen Zuschnitt auf und ist an ihrer von der Wickelwelle 19 abliegenden Kante mit einer schlauchförmigen Schlaufe 22 versehen. Durch die schlauchförmige Schlaufe 22 führt ein Auszugsprofil oder Spriegel, in dem Führungsstücke 23 und 24 teleskopartig gelagert sind. Die Führungsstücke 23 und 24 weisen einen Halsteil 25 auf, der einen kleineren Durchmesser aufweist als ein sich daran anschließendes Führungsglied 26, das die Gestalt eines kurzen zylinderförmigen Abschnitts aufweist. Die Führungsstücke 26 laufen in den Führungsschienen 16, die neben den beiden Seitenkanten des Heckfensters 4 angeordnet sind. Der Aufbau der Führungsschienen 16 ist weiter unten anhand der Fig. 3 erläutert.

Jede der Führungsschienen 16 enthält eine Führungsnut 27, die sich in Richtung auf die Rollobahn 15 in einem Führungsschlitz 28 öffnet.

Das untere Ende jeder Führungsschiene 16 ist mit einem Führungsrohr 29, 30 verbunden, in denen knicksteif zwei biegsame Schubglieder 31 und 32 geführt sind. Die biegsamen Schubglieder 31 und 32 sind sogenannte Suflexwellen. Sie bestehen aus einem zylinderförmigen Kern, der von einer schraubenförmig verlaufenden Rippe umgeben ist. Auf diese Weise wird eine Art flexibler Zahnstangen mit Rundumverzahnung erhalten.

Die Führungsrohre 29 und 30 verbinden die Führungsschienen 16 mit einem Getriebemotor 33. Der Getriebemotor 33 setzt sich aus einem permanent erregten Gleichstrommotor 34 und einem Getriebe 35 zusammen auf dessen Ausgangswelle 36 ein Stirnzahnrad 37 drehfest sitzt. Das Zahnrad 37 kämmt mit den beiden Schubgliedern 31 und 32 formschlüssig. Diese Schubglieder 31 und 32 laufen tangential an die an diametral gegenüberliegenden Seiten an dem Stirnzahnrad 37 vorbei und sind hierzu in entsprechenden Bohrungen 38 und 39 geführt.

Durch Ingangsetzen des Getriebemotors 33 werden die Schubglieder 31, 32 wahlweise vorgeschoben oder zurückgezogen. Der Bewegung der Schubglieder 31, 32 folgen die Führungsstücke 23 und 24. Diese werden mit Hilfe des Federmotors 21 gegen die freien Enden der Schubglieder 31, 32 anliegend gehalten, die sich in den Führungsnuten 27 befinden.

Fig. 3 zeigt im Querschnitt den Aufbau der Führungsschienen 16.

Entsprechend dem Querschnitt nach Fig. 3 setzt sich die Führungsschiene 16 aus einem Außenteil 41 und einen Stützteil 42 zusammen. Das Außenteil 41 besteht aus einem thermoplastischen Kunststoff und geht einstückig in die Innenverkleidung 6 der C-Säule 5 über. Das Außenteil 41 enthält die hinterschnittene Führungsnut 27, die sich über den Schlitz 28 nach außen öffnet. Im Querschnitt gesehen setzt sich die Führungnut 27 gedanklich aus einem kreisförmigen Abschnitt 43 und einem rechteckigen Abschnitt 44 zusammen. Der Durchmesser des kreisförmigen Abschnitts 43 ist an den Durchmesser der Führungstücke 26 angepasst.

Das Außenteil 41 zeigt eine Außen- oder Sichseite 45 auf, zu der etwa parallel eine Rückseite 46 verläuft. Die Außenseite 45 wird durch den Schlitz 28 in einen Abschnitt 45 a und einen Abschnitt 45 b aufgeteilt.

Neben dem Schlitz 28 bildet das Außenteil 41 einen aus der Rückseite 46 vorstehenden Wandabschnitt 47, der an seinem freien Ende einen Wandbereich 48 übergeht, der einem Kreisabschnitt folgt. An den Wandabschnitt 48 schließt sich wieder ein gerader Wandabschnitt 49 an, der zu dem Wandabschnitt 47 parallel ist und in den Wandabschnitt 45 b einmündet.

Wie der Querschnitt erkennen lässt, ist die Struktur an der Rückseite 46 frei von Hinterschneidungen, d.h. die beiden Wandabschnitte 47 und 49 werden von an der Außenseite von zwei zueinander parallelen Seitenwänden begrenzt.

Neben dem Wandabschnitt 47 verläuft parallel zur Längserstreckung des Schlitzes 48 eine erste Hakenleiste 51, die, zusammen mit dem Wandabschnitt 47 an der Innenecke eine Nut 52 entstehen lässt. Spiegelbildlich dazu ist eine zweiten Hakenleiste 53 vorgesehen, die neben der Außenseite des Wandabschnitts 49 angeordnet ist und zusammen mit der Außenseite des Wandabschnitts 49 eine Nut 54 bildet.

Die Dimensionierungen der beiden Hakenleisten 51 und 53 sind so gewählt, dass das Außenteil 41 nach dem Spritzen ohne weiteres von dem komplementären Formnest der Spritzgussform abgezogen werden kann, indem die Elastizität der Hakenleisten 51 und 53 ausgenutzt wird. Auf diese Weise ist die Verwendung von komplizierten Werkzeugen mit beweglichen Kernen zum Erzeugen von Hinterschneidungen insoweit entbehrlich.

Außerdem ist die Wandstärke im Bereich des Wandabschnitts 48, der den zylindrischen Bereich 43 des Querschnittsprofils umgibt, in Relation zu der Weite des Schlitzes 28 so gewählt, dass das fertig gespritzte Außenteil 41 von dem Formkern zum Erzeugen des Querschnitts 43 und des Querschnitts 44 abgezogen werden kann, und zwar in Richtung senkrecht zu der Ebene, die durch die Außenseite 45 a bzw. 45 b gebildet ist. Beim Abziehen von dem Spritzgusswerkzeug wird das Außenteil 41 im Bereich der Führungsnut aufgeweitet, bis der entsprechende Teil des Formkerns durch den Schlitz 28 herausgleiten kann. Aufgrund der Eigenelastizität kann das Außenteil 41 anschließend in die ursprünglich geplante Gestalt zurückfedern.

Da eine solche Struktur für sich genommen unter Umständen zu nachgiebig wäre, um einwandfrei die Führungsglieder 26 zu führen, ohne dass diese aus der Führungsnut 27 freikommen könnten, ist das Stützteil 42 vorgesehen. Das Stützteil 42 ist karosseriefest angeordnet, wie dies eine schematisch angedeuteter Abschnitt 55 der Innenseite des Karosseriebleches erkennen lässt. Das Stützteil 42 setzt sich aus einer Befestigungsplatte 56 zusammen, von der zwei Schenkel 57 und 58 aufragen. Die Schenkel 57 und 58 begrenzen einen Innenraum, der dazu geeignet ist, spielfrei die Struktur aufzunehmen, die die rückseitige Kontur des Außenteils 41 im Bereich der Führungsnut 27 bildet. Im Einzelnen setzt sich diese U-förmige Öffnung aus einem bogenförmigen Teil zusammen, an dem sich der Wandabschnitt 48 anlegt, sowie zwei zueinander parallelen Flächen, an denen sich die Außenseiten der Wandabschnitte 47 und 49 anlegen.

Die freien Enden der beiden Schenkel 57 und 58 sind mit flachen Hakennasen 59 und 61 versehen, die zu den Hakenleisten 51 und 53 komplementär sind.

Das Stützteil 52 besteht aus einem relativ festen und verhältnismäßig unelastischem Material, das in der Lage ist den in Betrieb auftretenden Kräften, die eine Aufweitung des Schlitzes 28 bewirken wollen, hinreichenden Widerstand entgegensetzt.

Beispielsweise besteht das Stützteil 42 aus einem Aluminiumstrangpressprofil, das gegebenenfalls nachfolgend noch entsprechend dem gewünschten Verlauf, gebogen werden kann.

Im montierten Zustand greifen die beiden freien Schenkel 57 und 58 in die Nuten 52 und 54 ein und werden dort, wie gezeigt, verrastet. Hierdurch wird gleichzeitig eine Verankerung der Innenverkleidung 6 im Bereich der Führungsschiene 16 erreicht.

Aufgrund der erfindungsgemäßen Lösung wird eine Führungsschiene 16 erhalten, die sich über eine große Länge aus Kunststoff fertigen lässt, wobei kein beweglicher Kern in dem Spritzgusswerkzeug erforderlich ist. Eine solche Form wäre sehr schwer herzustellen und extrem teuer, denn bei einem Durchmesser des kreisfömigen Teils 43 der Führungsnut 27 von ca. 8 mm ist es nur sehr schwer möglich, diesen Kern als beweglichen Kern auf eine Länge von ca. 50 cm positionsrichtig zu halten. Der erfindungsgemäße Aufbau der Führungsschiene 16 vermeidet einen solchen beweglichen Kern. Vielmehr kann der Kern starr an einem Steg befestigt werden, der den Schlitz 28 abformt.

Ein weiterer Vorteil der erfindungsgemäßen Lösung besteht darin, dass die für den Betrachter sichtbare Farbe der Führungsschiene 16 exakt der Farbe der Innenverkleidung 6 entspricht. Es müssen keine Vorkehrungen getroffen werden, um eine glänzende Aluminiumschiene zu verbergen, wie diese beim Stand der Technik erforderlich ist.

Ferner zeigt das thermoplastische Material günstigere Gleiteigenschaften in Verbindung mit dem Führungskörper 26. Es besteht keine Notwendigkeit mehr den Führungskörper 26 unbedingt aus Kunststoff herstellen zu müssen oder mit Kunststoff beschichten zu müssen, um günstige Gleiteigenschaften zu erhalten, wie dies erforderlich ist, wenn die Führungsschiene aus Aluminiumprofil bestehen würde.

Schließlich neigt die Kunststoffoberfläche aufgrund der Nachgiebigkeit weit weniger zu Klappergeräuschen, als eine harte Metalloberfläche.

Das Metall beschränkt sich auf den Stützteil 42. Der unverformbare Stützteil 42 gewährleistet über lange Zeit die Formtreue der Führungsnut 27.

Ein Fensterrollo für Kraftfahrzeuge weist aus Kunststoff bestehende Führungsschienen auf. Die Führungsschienen sind in spezieller Weise derart gestaltet, dass Spritzgusswerkzeuge verwendet werden können, die zum Erzeugen der Führungsnut ohne bewegliche Kerne auskommen.

## Patentansprüche

1. Führungsschienenanordnung (16) für Rollos (14) und dergleichen in Kraftfahrzeugen,
mit einem Außenteil (41), das erste Verbindungsmittel (51,53) aufweist und das eine hinterschnittene Führungsnut (27) enthält, die zumindest über einen Teil der Länge des Außenteils (41) durchläuft, und
mit einem Stützteil (42), das zweite Verbindungsmittel (59,61) aufweist, die mit den ersten Verbindungsmitteln (51,53) des Außenteils (41) verbindbar sind, **dadurch gekennzeichnet, dass** das Außenteil (41) als Spritzgussteil aus elastisch verformbarem Material hergestellt ist und dass das Stützteil (42) aus einem weniger verform-baren Material als das Außenteil (41) hergestellt ist.

2. Führungsschienenanordnung nach Anspruch 1, **dadurch gekennzeichnet, dass** das Außenteil (41) überwiegend konstante Wanddicke aufweist.

3. Führungsschienenanordnung nach Anspruch 1, **dadurch gekennzeichnet, dass** das Außenteil (41) eine schmale längliche Form aufweist, die im Wesentlichen dem Verlauf der Führungsnut (27) folgt.

4. Führungsschienenanordnung nach Anspruch 1, **dadurch gekennzeichnet, dass** das Außenteil (41) eine flächige Gestalt aufweist, derart, dass die Abmessungen quer zu der Führungsnut (27) groß sind gegenüber der Führungsnut (27).

5. Führungsschienenanordnung nach Anspruch 1, **dadurch gekennzeichnet, dass** das Außenteil (41) einen Teil einer Innenverkleidung (6) eines Kraftfahrzeugs bildet.

6. Führungsschienenanordnung nach Anspruch 1, **dadurch gekennzeichnet, dass** sich der Querschnitt der Führungsnut (27) aus einem schmalen Abschnitt (44) und einem demgegenüber erweiterten Abschnitt (43) zusammensetzt, wobei der schmale Abschnitt (44) den Nutenschlitz (28) bildet.

7. Führungsschienenanordnung nach Anspruch 6, **dadurch gekennzeichnet, dass** der schmale Abschnitt (44) parallelflankig ist.

8. Führungsschienenanordnung nach Anspruch 6, **dadurch gekennzeichnet, dass** der erweiterte Abschnitt (43) in der Nachbarschaft zu dem schmalen Abschnitt (44) Schultern bildet, die verrundet sind oder in einem stumpfen Winkel in den schmalen Abschnitt (44) übergehen.

9. Führungsschienenanordnung nach Anspruch 6, **dadurch gekennzeichnet, dass** der erweiterte Abschnitt (43) kreisförmig ist.

10. Führungsschienenanordnung nach Anspruch 1, **dadurch gekennzeichnet, dass** die Führungsnut (27) und die Umgebung der Führungsnut (27) derart gestaltet sind, dass das Außenteil (41) von einem Formkern trennbar ist, der unbeweglich in einem Formnest zum Spritzen des Außenteils (41) angeordnet ist.

11. Führungsschienenanordnung nach Anspruch 1, **dadurch gekennzeichnet, dass** die ersten Verbindungsmittel (51,53) als Rastmittel ausgebildet sind.

12. Führungsschienenanordnung nach Anspruch 1, **dadurch gekennzeichnet, dass** die ersten Verbindungsmittel (51,53) wenigstens einen Haken umfassen.

13. Führungsschienenanordnung nach Anspruch 1, **dadurch gekennzeichnet, dass** die ersten Verbindungsmittel (51,53) wenigstens eine hintergriffige Leiste umfassen, die im montierten Zustand in Richtung auf das Stützteil (42) zeigen.

14. Führungsschienenanordnung nach Anspruch 1, **dadurch gekennzeichnet, dass** das Material des Außenteils (41) aus einer Gruppe von Thermoplasten ausgewählt ist, zu der PVC, Polypropylen, Polyethylen, Polyamid gehören.

15. Führungsschienenanordnung nach Anspruch 1, **dadurch gekennzeichnet, dass** der Stützteil (42) einen Bereich aufweist, der im montierten Zustand die Führungsnut (27) zumindest abschnittsweise an den Flanken seitlich stützt, derart, dass der Bereich einem Aufweiten der Führungsnut (27) entgegenwirkt.

16. Führungsschienenanordnung nach Anspruch 1, **dadurch gekennzeichnet, dass** der Stützteil (42) einen Bereich aufweist, der im montierten Zustand die Führungsnut (27) zumindest abschnittsweise in Richtung parallel zu einer Ebene unterstützt, die durch den Schlitz (28) und in die Führungsnut (27) verläuft.

17. Führungsschienenanordnung nach Anspruch 16, **dadurch gekennzeichnet, dass** der Bereich von einem Steg gebildet ist.

18. Führungsschienenanordnung nach Anspruch 1, **dadurch gekennzeichnet, dass** der Stützteil (42) einen über die Länge konstanten Querschnitt aufweist.

19. Führungsschienenanordnung nach Anspruch 1, **dadurch gekennzeichnet, dass** der Stützteil (42) im wesentliche steif ist.

20. Führungsschienenanordnung nach Anspruch 1, **dadurch gekennzeichnet, dass** der Stützteil (42) mit Leisten (57,58) versehen ist, die an ihren freien Enden Haken (59,60) tragen, die die zweiten Verbindungsmittel bilden.

21. Führungsschienenanordnung nach Anspruch 1, **dadurch gekennzeichnet, dass** der Stützteil (42) als Spritzgussteil hergestellt ist.

22. Führungsschienenanordnung nach Anspruch 1, **dadurch gekennzeichnet, dass** das Stützteil (42) frei von Hinterschneidungen ist, die bezogen auf ein Spritzgusswerkzeug zur Herstellung des Stützteils (41) nicht an den Formspalt angrenzen, derart, dass das Spritzgusswerkzeug frei von ziehbaren Kernen bleiben kann.

23. Führungsschienenanordnung nach Anspruch 1, **dadurch gekennzeichnet, dass** das Stützteil (42) ein Abschnitt eines Strangpressteils ist.

24. Fensterrollo (14) für Kraftfahrzeuge,
mit einer drehbar gelagerten Rollowelle (19),
mit einer Rollobahn (15), die mit einer Kante an der Rollowelle (15) befestigt ist und die eine von der Rollowelle (15) abliegende Kante (22) aufweist,
mit einem Spriegel (23,24), der mit der Rollobahn (15) an einer von der Rollowelle (19) abliegenden Stelle verbunden ist, und
mit wenigstens einer Führungsschiene (16), in der mit einem Ende der Spriegel (23,24) geführt ist und die aufweist:
ein Außenteil (41), das als Spritzgussteil aus elastisch verformbarem Material hergestellt ist, das erste Verbindungsmittel (51,53) aufweist und das eine hinterschnittene Führungsnut (27) enthält, die zumindest über einen Teil der Länge des Außenteils (41) durchläuft, und
ein Stützteil (42), das aus einem weniger verformbaren Material als das Außenteil (41) hergestellt ist und zweite Verbindungsmittel (59,61) aufweist, die mit den ersten Verbindungsmitteln (51,53) des Außenteils (41) verbindbar sind.

25. Fensterrollo nach Anspruch 24, **dadurch gekennzeichnet, dass** die Führungsschiene (16) nach einem oder mehreren der Ansprüche 1 bis 23 ausgeführt ist.

## Claims

1. Guide rail arrangement (16) for roller blinds (14) and the like in motor vehicles, with an outer part (41), which has first connection elements (51, 53) and contains an undercut guide groove (27), which runs continuously at least over a portion of the length of the outer part (41), and
with a support part (42), which has second connection elements (59, 61), which can be connected to the first connection elements (51, 63) of the outer part (41), **characterised in that** the outer part (41) is produced as an injection moulded part made of elastically deformable material and that the support part (42) is made of a less deformable material than the outer part (41).

2. Guide rail arrangement according to claim 1, **characterised in that** the outer part (41) has a predominantly constant wall thickness.

3. Guide rail arrangement according to claim 1, **characterised in that** the outer part (41) has a narrow elongated shape, which substantially follows the course of the guide groove (27).

4. Guide rail arrangement according to claim 1, **characterised in that** the outer part (41) has a plane structure, such that transversely to the guide groove (27) the dimensions are large in relation to the guide groove (27).

5. Guide rail arrangement according to claim 1, **characterised in that** the outer part (41) forms a part of an interior lining (6) of a motor vehicle.

6. Guide rail arrangement according to claim 1, **characterised in that** the cross-section of the guide groove (27) consists of a narrow section (44) and a widened section (43) compared thereto, wherein the narrow section (44) forms the groove slot (28).

7. Guide rail arrangement according to claim 6, **characterised in that** the narrow section (44) is parallel-flanked.

8. Guide rail arrangement according to claim 6, **characterised in that** in the vicinity of the narrow section (44) the widened section (43) forms shoulders, which are rounded or merge into the narrow section (44) at an obtuse angle.

9. Guide rail arrangement according to claim 6, **characterised in that** the widened section (43) is circular.

10. Guide rail arrangement according to claim 1, **characterised in that** the guide groove (27) and the surrounding area of the guide groove (27) are configured in such a manner that the outer part (41) is separable from a mould core, which is immovably arranged in a mould cavity for injecting the outer part (41).

11. Guide rail arrangement according to claim 1, **characterised in that** the first connection elements (51, 53) are configured as catch elements.

12. Guide rail arrangement according to claim 1, **characterised in that** the first connection elements (51, 53) comprise at least one hook.

13. Guide rail arrangement according to claim 1, **characterised in that** the first connection elements (51, 53) comprise at least one strip engaging behind them, which in mounted state points in the direction of the support part (42).

14. Guide rail arrangement according to claim 1, **characterised in that** the material of the outer part (41) is selected from a group of thermoplastics, which includes PVC, polypropylene, polyethylene, polyamide.

15. Guide rail arrangement according to claim 1, **characterised in that** the support part (42) has a region, which in mounted state laterally supports the guide groove (27) on the flanks at least in sections such that the region counteracts widening of the guide groove (27).

16. Guide rail arrangement according to claim 1, **characterised in that** the support part (42) has a region, which in mounted state supports the guide groove (27) at least in sections in a direction parallel to a plane, which runs through the slot (29) and into the guide groove (27).

17. Guide rail arrangement according to claim 16, **characterised in that** the region is formed by a web.

18. Guide rail arrangement according to claim 1, **characterised in that** the support part (42) has a cross-section that is constant over the length.

19. Guide rail arrangement according to claim 1, **characterised in that** the support part (42) is substantially rigid.

20. Guide rail arrangement according to claim 1, **characterised in that** the support part (42) is provided with bars (57, 58), which at their free ends bear hooks (59, 60), which form the second connection elements.

21. Guide rail arrangement according to claim 1, **characterised in that** the support part (42) is produced as an injection moulded part.

22. Guide rail arrangement according to claim 1, **characterised in that** the support part (42) is free from undercuts, which with respect to an injection mould for producing the support part (41) do not adjoin the mould gap such that the injection mould can remain free of cores that can be pulled.

23. Guide rail arrangement according to claim 1, **characterised in that** the support part (42) is a section of an extruded part.

24. Window roller blind (14) for motor vehicles,
with a rotatably mounted roller blind shaft (19),
with a blind sheet (15), which is fastened to the roller blind shaft (15) at one edge and has an edge (22) remote from the roller blind shaft (15),
with a rib (23, 24), which is connected to the blind sheet (15) at a location remote from the roller blind shaft (19), and
with at least one guide rail (16), in which the rib (23, 24) is guided at one end and which has:
an outer part (41), which is produced as an injection moulded part made of elastically deformable material, has first connection elements (51, 53) and contains an undercut guide groove (27), which runs continuously at least over a portion of the length of the outer part (41), and
a support part (42), which is made of a less deformable material than the outer part (41) and has second connection elements (59, 61), which can be connected to the first connection elements (51, 63) of the outer part (41).

25. Window roller blind according to claim 24, **characterised in that** the guide rail (16) is configured according to one or more of claims 1 to 23.

## Revendications

1. Agencement de glissière (16) pour stores à enrouleur (14) et éléments analogues dans des véhicules automobiles,
comprenant un élément extérieur (41) qui présente des premiers moyens d'assemblage (51, 53) et qui comporte une rainure de guidage (27) en contre-dépouille, laquelle s'étend au moins sur une partie de la longueur de l'élément extérieur (41), et
comprenant un élément d'appui (42) qui présente des deuxièmes moyens d'assemblage (59, 61) qui peuvent être reliés aux premiers moyens d'assemblage (51, 53) de l'élément extérieur (41), **caractérisé en ce que** l'élément extérieur (41) est fabriqué comme pièce moulée par injection, à partir d'une matière déformable élastique, et par le fait que l'élément d'appui (42) est fabriqué à partir d'une matière moins déformable que l'élément extérieur (41).

2. Agencement de glissière selon la revendication 1, **caractérisé en ce que** l'élément extérieur (41) présente principalement une épaisseur de paroi constante.

3. Agencement de glissière selon la revendication 1, **caractérisé en ce que** l'élément extérieur (41) présente une forme allongée étroite qui suit sensiblement le tracé de la rainure de guidage (27).

4. Agencement de glissière selon la revendication 1, **caractérisé en ce que** l'élément extérieur (41) présente une forme plane, de telle sorte que les dimensions perpendiculaires à la rainure de guidage (27) soient grandes par rapport à la rainure de guidage (27)

5. Agencement de glissière selon la revendication 1, **caractérisé en ce que** l'élément extérieur (41) fait partie d'un habillage intérieur (6) d'un véhicule automobile.

6. Agencement de glissière selon la revendication 1, **caractérisé en ce que** la section transversale de la rainure de guidage (27) se compose d'une portion étroite (44) et d'une portion (43) élargie par rapport à celle-ci, la portion étroite (44) formant la fente de rainure (28).

7. Agencement de glissière selon la revendication 6, **caractérisé en ce que** la portion étroite (44) présente des flancs parallèles.

8. Agencement de glissière selon la revendication 6, **caractérisé en ce que** dans le voisinage de la portion étroite (44), la portion élargie (43) forme des épaulements qui sont arrondis ou se raccordent sous un angle obtus à la portion étroite (44).

9. Agencement de glissière selon la revendication 6, **caractérisé en ce que** la portion élargie (43) a une forme circulaire.

10. Agencement de glissière selon la revendication 1, **caractérisé en ce que** la rainure de guidage (27) et le voisinage de la rainure de guidage (27) sont conçus de manière telle que l'élément extérieur (41) puisse être séparé d'un noyau de moule qui est disposé de manière fixe dans une cavité de moule, en vue du moulage par injection de l'élément extérieur (41).

11. Agencement de glissière selon la revendication 1, **caractérisé en ce que** les premiers moyens d'assemblage (51, 53) sont réalisés sous forme de moyens d'encliquetage.

12. Agencement de glissière selon la revendication 1, **caractérisé en ce que** les premiers moyens d'assemblage (51, 53) comportent au moins un crochet.

13. Agencement de glissière selon la revendication 1, **caractérisé en ce que** les premiers moyens d'assemblage (51, 53) comportent au moins une aile en contre-dépouille qui, à l'état monté, est orientée en direction de l'élément d'appui (42).

14. Agencement de glissière selon la revendication 1, **caractérisé en ce que** la matière de l'élément extérieur (41) est choisie dans un groupe de matières thermoplastiques, auquel appartiennent le PVC, le polypropylène, le polyéthylène, le polyamide.

15. Agencement de glissière selon la revendication 1, **caractérisé en ce que** l'élément d'appui (42) présente une zone qui, à l'état monté, soutient latéralement, au moins par portions, les flancs de la rainure de guidage (27), de manière à ce que ladite zone s'oppose à un élargissement de la rainure de guidage (27).

16. Agencement de glissière selon la revendication 1, **caractérisé en ce que** l'élément d'appui (42) présente une zone qui, à l'état monté, soutient la rainure de guidage (27) au moins par portions, dans une direction parallèle à un plan qui passe par la fente (28) et s'étend dans la rainure de guidage (27).

17. Agencement de glissière selon la revendication 16, **caractérisé en ce que** la zone est constituée d'une paroi.

18. Agencement de glissière selon la revendication 1, **caractérisé en ce que** l'élément d'appui (42) présente une section transversale qui est constante sur toute la longueur.

19. Agencement de glissière selon la revendication 1, **caractérisé en ce que** l'élément d'appui (42) est sensiblement rigide.

20. Agencement de glissière selon la revendication 1, **caractérisé en ce que** l'élément d'appui (42) est doté d'ailes (57, 58) qui portent à leurs extrémités libres des crochets (59, 60) constituant les deuxièmes moyens d'assemblage.

21. Agencement de glissière selon la revendication 1, **caractérisé en ce que** l'élément d'appui (42) est réalisé comme pièce moulée par injection.

22. Agencement de glissière selon la revendication 1, **caractérisé en ce que** l'élément d'appui (42) ne comporte pas de contre-dépouilles qui, rapportées à un outil de moulage par injection destiné à fabriquer l'élément d'appui (42), ne soient pas adjacentes au joint de moule, de telle sorte que l'outil de moulage par injection puisse être dépourvu de noyaux extractibles.

23. Agencement de glissière selon la revendication 1, **caractérisé en ce que** l'élément d'appui (42) est une partie d'une pièce extrudée.

24. Store à enrouleur pour vitre (14) destiné à des véhicules automobiles,
comprenant un axe de store (19) monté avec possibilité de rotation,
comprenant une bande de store (15) qui est fixée par un bord à l'axe de store (19) et qui présente un bord (22) éloigné de l'axe de store (19),
comprenant un arceau (23, 24) qui est relié à la bande de store (15), à un endroit éloigné de l'axe de store (19), et
comprenant au moins un rail de guidage (16) dans lequel l'arceau (23, 24) est guidé avec une extrémité et qui présente :
un élément extérieur (41) qui est fabriqué sous forme de pièce moulée par injection, à partir d'une matière déformable élastique, qui présente des premiers moyens d'assemblage (51, 53) et qui comporte une rainure de guidage (27) en contre-dépouille, laquelle s'étend au moins sur une partie de la longueur de l'élément extérieur (41), et
comprenant un élément d'appui (42) qui est fabriqué à partir d'une matière moins déformable que l'élément extérieur (41) et présente des deuxièmes moyens d'assemblage (59, 61) qui peuvent être reliés aux premiers moyens d'assemblage (51, 53) de l'élément extérieur (41).

25. Store à enrouleur pour vitre selon la revendication 24, **caractérisé en ce que** le rail de guidage (16) est réalisé selon une ou plusieurs des revendications 1 à 23.
